# EUROPEAN PATENT SPECIFICATION

(11) **EP 3 724 545 B1**
(45) Date of publication and mention of the grant of the patent: **21.02.2024**
(21) Application number: 18800205.9
(22) Date of filing: 15.11.2018
(51) Int. Cl.: F16L 5/04, H02G 3/22, H02G 3/04

(54) **A SYSTEM CONSISTING OF A FIRE SAFE SEALING AND AN APERTURE IN A FLOOR OR A CEILING OF A BUILDING AND A METHOD FOR SEALING AN APERTURE IN A FLOOR OR A CEILING OF A BUILDING**
EIN AUS EINER FEUERFESTEN DICHTUNG UND EINER ÖFFNUNG IN EINEM BODEN ODER IN EINER DECKE EINES GEBÄUDES BESTEHENDES SYSTEM UND EIN VERFAHREN ZUM ABDICHTEN EINER ÖFFNUNG IN EINEM FUSSBODEN ODER EINER DECKE EINES GEBÄUDES
UN SYSTÈME CONSTITUÉ D'UN SCELLEMENT ANTI-INCENDIE ET OUVERTURE DANS LE PLANCHER OU LE PLAFOND D'UN BÂTIMENT ET UN PROCÉDÉ POUR SCELLER UNE OUVERTURE DANS LE PLANCHER OU LE PLAFOND D'UN BÂTIMENT

(30) Priority: 11.12.2017 EP 17206460
(43) Date of publication of application: 21.10.2020
(73) Proprietor: ROCKWOOL A/S, 2640 Hedehusene (DK)
(72) Inventor: ALBERS, Rainer, 48612 Horstmar (DE)
(74) Representative: Brinkmann & Partner
(86) International application number: PCT/EP2018/081432
(87) International publication number: WO 2019/115141

(56) References cited:
- EP-A2- 0 449 414
- WO-A1-00/45079
- WO-A1-00/52278
- WO-A1-93/21404
- WO-A1-2018/114162
- DE-A1- 3 504 742
- GB-A- 2 507 016
- JP-A- H01 243 810

## Description

The present invention relates to the technical field of fire safe penetration seals for services, i.e. service installations, such as e.g. pipes, cables or the like. Such fire safe penetration seals are intended to act as a firestopping and airseal barrier to reinstate the fire resistance and acoustic performances of concrete floors or ceilings, masonry walls and dry wall systems when apertures have been created for the passage of services. In certain areas, in particular within floors and ceilings the fire safe penetration seal is combined or acts together with a concrete layer to be poured on top of the penetration seal in order to achieve best possible fire protection and smoke seal for the full area of the floor or ceiling.

Main subject of the invention is a system consisting of a fire safe sealing and an aperture in a floor or a ceiling of a building through which at least a pipe, a cable or the like is guided; the ceiling or the floor having an upper and a lower surface, whereby the fire safe sealing consists of at least one non-combustible insulation element, preferably made of mineral wool, respectively bound mineral fibers and being bendable with respect to at least its longitudinal axis.

A further subject of the invention is a method for sealing an aperture through which at least a pipe, a cable or the like is guided through, in a floor or a ceiling of a building having an upper and a lower surface by using at least one such non-combustible insulation element, preferably made of bound mineral fibers and being bendable with respect to at least its longitudinal axis, as a fire safe sealing.

Systems for providing a fire safe sealing in an aperture of a building element, especially in a wall, a ceiling or in a floor are well-known from the prior art.

For example, GB 2 507 016 A1 discloses an insulation for sealing passages through walls comprising a sealing plug for sealing a space between an internal edge of a wall and a through-part, and on at least one lateral of the wall a thermal insulation sleeve surrounding the through-part over a portion of a length thereof starting from the sealing plug. In this prior art the through-part is a pipe and the wall is a horizontal concrete slab. The pipe passes through the slab and is disposed lateral in an orifice defined in the slab so as to pass through a shell being made of mineral wool. The shell has a certain length and a certain thickness and is cut and installed around the pipe. This shell is clamped with stainless iron (steel) wire. Shuttering is placed under the slab and around the pipe through the wall under the shell so as to define with the shell and the walls a mould for receiving mortar.

In a specific embodiment the wall being a slab, the shuttering being such that the sealing plug reaches a thickness of 150 millimeters and so that the lower face of the shuttering panel, made of polystyrene, for example, is flush with the lower face of the concrete slab. The shuttering is removed when the mortar achieves an adequate consistency.

A further embodiment of a fire protected penetration is disclosed in WO 00/52278. This fire-protected penetration is used for a conduit passing through a hole in a wall. The conduit has a through-going insulation, preferably of pipe insulation section type, made of mineral wool, which may be glass wool. The space between the hole in the wall and the conduit insulation is filled with packed, radially compressed fire-retardant mineral wool, preferably stone wool. The system of this fire-protected penetration consists of two plaster boards, being inserted into an aperture in a wall. The plaster boards are placed on wall studs which keep the two inner plaster boards at a fixed stud distance from each other. The through-hole has a quadrangular cross-section and is made in the wall. A metallic pipe is passed axially and centrally through the aperture in the wall. On the pipe, a pipe insulation extending through the aperture is arranged in the form of a conventional pipe insulation section made of glass wool. The space between abutments and the corresponding part of the pipe insulation section is filled with packed stone wool. The stone wool is packed around the pipe insulation section such that it is radially very much compressed, so as to be able to expand. If needed, radially inwards towards the pipe insulation section and the pipe to compensate, for instance, for a collapse of the pipe insulation section, if the latter is exposed to such a high temperature that the glass wool softens and "settles". The two lateral openings of the aperture in the wall are filled with after-filling or after-repairing material, which suitably contributes to the fire protection. The material is advantageously mortar or plaster or the like. Therefore, such a system consists of an insulation element which is clamped between abutments, for example parts of the wall and the outer surface of a pipe being insulated with a conventional pipe insulation section. Furthermore, at both laterals of the insulation element the aperture is closed by a material like mortar or plaster or the like.

A further system for providing a sealing in an aperture in a wall, a ceiling or a floor of a building is known from DE 35 04 742 A1 disclosing a cable bulkhead which, in the region of a wall through-opening, seals the cable which is passed through there with respect to the opening. This system consists of several insulation boards being stacked in an aperture supplemented with a layer of loose mineral fibers being arranged between two insulation boards and surrounding a set of cables in a cable tray, thus forming an insert into the aperture in the wall. On both laterals of the wall the insert is covered with non-flammable sealing boards consisting of two layers of which one layer is an aluminum-clad ceramic laminate and the other being a non-combustible coating layer.

Each of the before described systems have the disadvantage that it is very difficult to install the elements of the system into the aperture of a building. Furthermore, these systems are only partly suitable for apertures in a ceiling or a floor as it will be necessary to use further construction elements to fix the system in the aperture as it is described in the following prior art:
For example, DE 100 08 100 A1 describes a method of sealing an aperture in a ceiling through which pipes or the like are guided. For this purpose, a permanent shuttering in which holes are cut conforming to the shape and size of the pipes or the like is laid. Said shuttering is fixed into the aperture by at least two angled holding elements which are connected to the ceiling and on which a layer of a casting compound for example made of mortar or concrete is arranged. An alternative embodiment of this fire safe sealing is disclosed in DE 101 08 316 A1. According to this prior art the holding elements are replaced and a shuttering board which is connected to the lower outer surface of the ceiling, e.g. by gluing and thereby carrying the casting compound.

Furthermore, a comparable embodiment of such a fire safe sealing is disclosed in DE 201 11 127 U1. Furthermore, JP 01243810 A and JP 03284112 A disclose a constructing method for cable penetrating sections or a fire proof construction each containing metal fittings of a steel wire or the like to carry for example an inorganic fiber plate onto which a fire-proof filler is arranged.

According to the before described prior art, tremendous efforts and several elements such as holding devices for fixing and carrying a shuttering are necessary to finally seal an aperture and to define a cavity into which a filling material, e.g. of mortar or concrete is placed. These embodiments are expensive; moreover, they are complex to install which increases the risk of possible mistakes and inaccuracy which will cause problems with respect to the fire resistancy of such sealings.

WO 93/21404 discloses a board for use in a sandwich element used in walls, floors or roofs of buildings comprising mineral wool lamellae arranged side by side so that fibers of the mineral wool lie perpendicular to the plane of the board and so that the longitudinal length of the lamellae is at an angle in the range 25 to 65° to a side edge of the board. The lamellae are arranged between two surfaces layers on each planar surface thereby giving a certain stiffness to the board as walls should be formed by using a plurality of boards.

GB 2 507 016 A discloses a system consisting of a fire safe sealing and a wall of a building comprising an aperture in the wall, through which a pipe is guided. The wall has two parallel surfaces which are planar with planar surfaces of the sealing. The sealing consists of a sealing plug made of mineral fibers and a sleeve surrounding the pipe and being made of rock wool, mineral fibers, glass wool or silicates. Both planar surfaces of the sealing plug are covered with silicone cloth secured by glue deposited at the periphery of the sealing plug. In case of fire the glue tends to melt and the stability of the system is reduced.

WO 00/45079 A1 discloses a device for providing a sealing covering for a train of pipes and/or ducts within a wall and/or ceiling or bottom opening of a building. The device consists of a sleeve surrounding said train of pipes and/or ducts and being heat resistant and smoke-tight and of a bulkhead adjoining the surface area of said sleeve and filling up said wall and/or ceiling or bottom opening. Said sleeve is formed as a pipe shell made of mineral fibres and said pipe shell is flexible in the axial and radial directions. Said bulkhead is comprised of single-, double- or multi-layered mineral wool panels which are coated at least on one side thereof with an insulating layer creator.

Finally, JP H01 243 810 A discloses a system of a fire safe sealing and a floor or a ceiling of a building comprising an aperture in the floor or the ceiling of the building, through which aperture a pipe is guided. The ceiling or the floor has an upper surface and a lower surface and the fire safe sealing consists of two layers forming a non-combustible insulation element, and an additional u- shaped supporting element having arms being arranged on top of the upper surface of the ceiling or the bottom to support the insulation element from below. The supporting element is made from a wire being bend to be inserted into the aperture.

It is therefore an object of the invention to provide a system consisting of a fire safe sealing and an aperture in a floor or a ceiling of a building which is easy to handle, easy to install and which makes it possible to use only a minimum number of elements to be handled giving excellent fire resistance and which provides increased sound and/or thermal insulation characteristics.

Furthermore, it is a further object of the invention to provide a method for closing an aperture with which it is very easy to close an aperture thereby allowing pipes, cables or the like running through the aperture and being sealed in a fire-resistant way.

There is provided a system according to claim 1 and a method according to claim 15.

The system comprises an insulation element having a length and/or a width being longer than a length and/or a width of the aperture, whereby the difference(s) of the length of the insulation element relative to the length of the aperture and/or the width of the insulation element relative to the width of the aperture is adjusted so that the insulation element inserted into the aperture in a bow-shaped course because of its length and/or width and the bendability of the insulation element and does not extend beyond two planes defined by the upper and lower surface of the ceiling or the floor wherein the insulation element is therefore force clamped into the aperture so that a covering layer of mortar or concrete can be arranged on top of the insulation element without the need for additional supporting elements from below.

The main aspect of the invention with respect to the system is that a non-combustible insulation element is used which size at least in one dimension, length or width, is larger than the dimension of the aperture into which the insulation element has to be inserted. Because of a larger length and/or width and the bendability of the insulation element it may be fixed to the aperture in a bow-shaped course thereby not extending beyond the upper and lower surface of the ceiling or the floor. The insulation element is therefore force clamped into the aperture and depending on the elasticity the insulation element is fixed into the aperture so that the covering layer of mortar or concrete can be arranged on top of the insulation element without the need for additional supporting elements from the below, like e.g. a formwork or shuttering. This layer of mortar or concrete closes the aperture on the upper part of the ceiling or the floor and gives an unbroken surface of the ceiling or the floor. Most of the layer of the concrete or mortar is arranged in crotches provided by the boards of the insulation element on both sides of the insulation element in longitudinal direction or cross-wise to the longitudinal direction.

Preferably the insulation element has a size being larger than the aperture in one dimension. Of course the insulation element will also be provided with a slightly larger dimension in the opposite direction but not in a specified or controlled manner as to form a certain bow-shaped course than for the one dimension.

As mentioned above, the insulation element will be arranged arc-shaped in the aperture which means that the insulation element has a larger dimension compared to the one of the aperture.

The non-combustible insulation element consists of at least two, preferable several strip-shaped firestop elements, each having two main surfaces being arranged parallel to each other and having different lengths (a, b), whereby the two surfaces are connected to each other via lateral faces. It has been discovered that it is easier to handle two or more such firestop elements of the insulation element during the installment of the insulation element into the aperture. Preferably the insulation element contains two parts being connected to the lateral faces of the aperture in the ceiling or the floor which have a right trapezoid cross section. These parts may be starter elements being in contact with opposite lateral faces of the aperture. Two side faces of these elements are arranged with respect to the upper and lower surface of the insulation element under an angle being not 90°. These parts have two parallel surfaces of different lengths (a, b) which means one surface is longer than the other. The longer surface is arranged downwardly and the shorter surface of these parts is arranged upwardly in the aperture of the ceiling or the floor. Connected to the lateral surfaces several additional firestop elements of isosceles trapezoidal cross section of the non-combustible insulation element are subsequently arranged arc-shaped between these two starter elements being in contact to lateral faces of the aperture. Therefore, the insulation element contains for example two starter elements of right trapezoid cross section and several intermediate elements of isosceles trapezoidal cross section.

Preferably, the starter elements being connected to the lateral faces of the aperture are connected by connecting elements being fixed to the lateral faces of the aperture, each having a base plate to be fixed on the lateral face of the aperture and at least one pin like element to penetrate into the starter element. Depending on the length or width of the aperture and the weight of the insulation element several connecting elements have to be used. Preferably the pin like element is provided with at least one, preferably several barbs penetrating into the insulation element and thereby fixing the insulation element.

According to a further aspect of the invention the non-combustible insulation element itself respectively the strip-shaped firestop elements forming it have a trapezoidal cross section which allows the insulation element to be in a holohedral contact with the lateral faces of the aperture and to arrange the insulation element in a bow-shaped arrangement within the aperture. Using several strip-shaped firestop elements forming the insulation element and each having a trapezoidal cross section allows an easy installment of the firestop elements thereby achieving the arc-shaped arrangement within the aperture.

Preferably the non-combustible insulation element is made of mineral wool, respectively bound mineral fibers according to European Standard EN 13162:2012. The insulation element has a bulk density of 70 to 200 kg/m³ and more preferably between 120 to 160 kg/m³. It has been found that insulation elements made of bound mineral fibers having these bulk densities are in particular suitable for a fire safe sealing being installed in a bow-shaped arrangement within the aperture thereby giving a suitable compressibility and elasticity on the one hand and stability on the other hand to carry an additional layer of mortar or concrete. Such fire safe sealing is in particular suitable to achieve a high fire resistance for penetration seals according to the dedicated standard EN 1366-3:2009. Tests have proven the capability of a single layer 100 mm thick mineral wool insulation element to provide up to 1,5 hours' fire resistance integrity.

All firestop elements of the insulation element are of identical shape. This feature has the advantage that the firestop elements of the insulation elements can be used for different apertures and therefore be easily combined into a construction kit for a fire safe sealing to be installed in an aperture in a floor or a ceiling of a building which will be described later on. A customer can use the firestop elements of the insulation element and has not to decide which part has to be installed in which position as the use of identical parts has the advantage that each part fits in each place.

A further feature of the system according to the invention is given by a non-combustible insulation element having a lamellar like fiber orientation, e.g. a fiber orientation which is substantially perpendicular to its main surfaces. This fiber orientation has the advantage that the lamellar like firestop element of the insulation element or the insulation element itself is compressible in a direction parallel to the main surfaces of the insulation element and therefore parallel to the horizontal direction of the ceiling or the floor in the built-in state. The compressibility of the insulation element or the firestop elements of the insulation element caused by this fiber orientation has the effect that the clamping forces within the insulation element or between the insulation element and the lateral faces of the aperture can be increased by using the insulation element or a part of the insulation element in a compressed manner before inserting the insulation element or a part of the insulation element into the aperture. The insulation element or the part of the insulation element will then expand inside the aperture and built-up high clamping forces. On the other hand the fiber orientation of the insulation element perpendicular to its main surfaces has the advantage that it gives the insulation element a high compressive strength orthogonal to said main surfaces of the insulation element.

According to a further aspect of the invention the insulation element is divided into firestop elements in lengthwise direction and/or perpendicular to its lengthwise direction which means that the insulation element can be adapted to an aperture in which pipes, cables or the like are already installed.

Furthermore it is of advantage if the insulation element comprises areas or firestop elements being arranged in direct contact to the lateral faces of the aperture and having an increased compressibility, preferably provided by a fiber orientation substantially perpendicular to the main surfaces of the insulation element.

Preferably the insulation element has a thickness of 40 to 90%, preferably of 50 to 70% of the thickness of the ceiling or the floor. It has been detected that such a relation between the thickness of the insulation element and the ceiling or the floor effects in increased thermal and/or sound insulation characteristics together with increased stability of the fire safe sealing allowing to carry a layer of mortar or concrete on top of the insulation element. According to a further aspect of the invention the insulation element is arranged in a distance from the lower surface of the ceiling or the floor of approximately 5 to 25% of the thickness of the ceiling or the floor, whereby the maximum distance is preferably arranged in the middle of the aperture so that the insulation element is arranged in a bow-shaped form within the aperture.

As already pointed out the insulation element is covered by a layer of concrete or mortar, which layer is in horizontal alignment with the upper surface of the ceiling or the floor. In case a pipe or a cable is already installed in the aperture the layer of concrete or mortar can be brought in direct contact with the outer surface of the pipe or the cable or the like.

However, preferably the pipe, cable or the like in the plane of the layer of concrete or mortar is surrounded by a pipe shell, preferably made of mineral wool and having at least a length equal to the thickness of the insulation element, advantageously equal to the thickness of the ceiling or the floor. Such an embodiment has the advantage that the thermal and/or sound insulation characteristics and especially the fire resistancy are increased. According to a further development of the invention the pipe, cable or the like is surrounded by a pipe shell, preferably made of mineral wool, being arranged underneath the insulation element and having a diameter being larger than a diameter of a hole in the insulation element through which the pipe, cable or the like is guided, whereby the pipe shell is preferably in contact with the surface of the insulation element. The additional pipe shell can on the one hand be used as a bearing for the insulation element and increases on the other hand the sealing between the outer surface of the pipe, cable or the like and the insulation element which increases fire resistancy and of course thermal and/or sound insulation characteristics of the fire safe sealing in the aperture.

With respect to the system according to the invention it has been found as of advantage to use lamellas made of mineral wool as insulation element, preferably covered and/or connected by a foil, e. g. made of aluminum, metal, especially alloy, being arranged on at least one surface of the insulation element. Such a foil has the advantage that several lamellas made of mineral wool can be put together to provide the insulation element. Furthermore, such an embodiment provides improved smoke tightness. On the other hand the foil can be used as a detent which avoids that the layer of concrete or mortar diffuses into the insulation element thereby closing pores between the fibers and reducing the thermal and/or sound insulation characteristics of the insulation element. Furthermore, concrete or mortar diffusing into the insulation element increases the weight of the insulation element which results in a need for higher clamping forces between individual parts of the insulation element and/or between the insulation element and lateral faces of the aperture. With respect to the before mentioned object a method being adapted for the manufacture of the system described before and for closing an aperture through which a pipe, a cable or the like is guided through, in a floor or a ceiling of a building, is characterized in that the insulation element, having a length and/or a width being longer than a length and/or a width of the aperture is inserted into the aperture in a bow-shaped arrangement, whereby the difference(s) of the length of the insulation element relative to the length of the aperture and/or the width of the insulation element relative to the width of the aperture is adjusted so that the insulation element inserted into the aperture does not extend beyond two planes defined by the upper and lower surface of the ceiling or the floor and wherein the insulation element is therefore force clamped into the aperture so that a covering layer of mortar or concrete is arrangeable on top of the insulation element without the need for additional supporting elements from below.

According to the invention the aperture in the ceiling or in the floor has certain dimensions, namely length and width. Into the aperture an insulation element being bendable with respect to at least its longitudinal axis is inserted as a fire safe sealing. The insulation element has a length being larger than the length of the aperture so that the insulation element can only be inserted into the aperture by bending the insulation element so that the longitudinal length of the insulation element is shortened to a length which is shorter than the length of the aperture. In this bended arrangement the insulation element can be inserted into the aperture and because of its elasticity the insulation element tends to get back into its not bended arrangement thereby building up friction forces between the insulation element and the lateral faces of the aperture. Because the length of the aperture is shorter than the length of the insulation element the insulation element is arranged bow-shaped in the aperture whereby the length of the insulation element has to be adjusted in a way that the insulation element inserted into the aperture does not extend beyond at least the upper surface of the ceiling or the floor.

According to a preferred embodiment of the invention connecting elements are fixed to lateral faces of the aperture, each having a base plate to be fixed on a lateral face of the aperture and at least one pin like element penetrating into the insulation element. The pin like element can be equipped with barbs which additionally secure the insulation element inside the aperture.

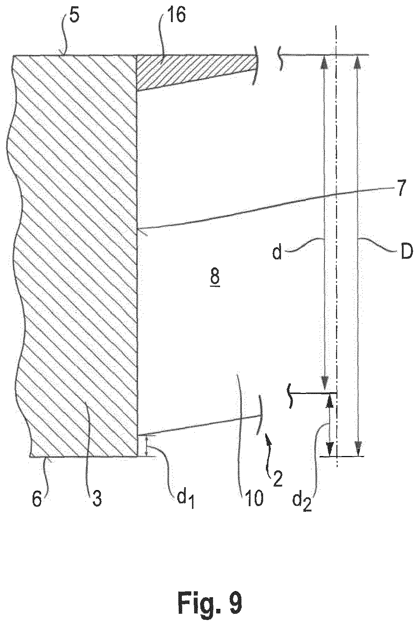

Furthermore it is of advantage that the insulation element is arranged in a manner that the height being defined as the distance from the center of the arc to the center of its base is in a range between 2,0 and 5,0 cm, whereby the maximum distance is preferably arranged in the middle of the aperture. In other words the difference between distance d₁ and d₂ as will be further explained later on in relation to a specific embodiment respectively figure 9. The arrangement of the insulation element in the aperture is bow-shaped and can be dome-like if the insulation element has not only a larger length than the aperture but additionally a larger width compared to the aperture.

On top of the insulation element a layer of concrete or mortar is arranged in a way that the layer of concrete or mortar after it is hardened is in horizontal alignment with the upper surface of the ceiling or the floor. The mortar or the concrete is brought in in a liquid or semi liquid state and can therefore be distributed very easily on top of further insulation element. It has been found of advantage to insert a barrier first on top of the insulation layer to avoid that the concrete or mortar diffuses into the insulation element made of mineral wool. Such a barrier can be a foil made of alloy or resin whereby alloy is preferred with respect to fire resistancy.

If a pipe, a cable or the like is present running through the aperture this pipe or cable or the like is surrounded by a pipe shell, preferably made of mineral wool before the insulation element is inserted into the aperture, which pipe shell has at least a length equal to the thickness of the insulation element, preferably equal to the thickness of the ceiling or the floor. The additional pipe shell surrounding the pipe or the cable has the advantage that it is more easily to seal the insulation element with respect to the pipe by using an additional pipe shell, especially made of mineral wool as this material is compressible and expands after it is inserted into a hole in a compressed way.

According to a further embodiment of the invention a pipe, a cable or the like running through the aperture is surrounded by a pipe shell, preferably made of mineral wool after the insulation element is inserted into the aperture, which pipe shell is arranged underneath the insulation element and having a diameter being larger than a diameter of a hole in the insulation element through which the pipe, cable or the like is guided, whereby the pipe shell is preferably in contact with the surface of the insulation element. This additional pipe shell has additional sealing effects and increases the fire resistancy of the fire safe sealing even in case the hole in the insulation element through which the pipe, cable or the like is running has a diameter larger than the outer diameter of the pipe, cable or the like or a pipe shell surrounding the pipe, cable or the like and running through the hole.

According to a first possibility of the method according to the invention being adapted for the manufacture of the system described before in a first step the pipe, cable or the like is inserted into the aperture. In a second step a hole for the pipe, cable or the like is provided in the insulation element. In a third step the insulation element is arranged in the aperture thereby surrounding the pipe, cable or the like already inserted into the aperture and finally in a fourth step a layer of concrete or mortar is arranged on the upper surface of the insulation element which layer is preferably in horizontal alignment with the upper surface of the ceiling or the floor.

According to a second embodiment the method according to the invention being adapted for the manufacture of the system described before is characterized in that in a first step the insulation element is arranged in the aperture. In a second step a hole for the pipe, cable or the like is provided in the insulation element and in a third step the pipe, cable or the like is inserted into the hole of the insulation element followed by a fourth step in which a layer of concrete or mortar is arranged on the upper surface of the insulation element which layer is preferably in horizontal alignment with the upper surface of the ceiling or the floor.

The invention will now be described in more detail by means of exemplifying embodiments with reference to the accompanying drawings, in which identical or corresponding components have been given the same reference numerals.
- Figure 1:: shows a first embodiment of a system consisting of a fire safe sealing and an aperture in a floor of a building in a partly sectional view;
- Figure 2:: shows a second embodiment of a system consisting of a fire safe sealing and an aperture in a ceiling of a building in a partly sectional view;
- Figure 3:: a first embodiment of a connecting element in a plan view;
- Figure 4:: the connecting element according to figure 3 in a side view;
- Figure 5:: a second embodiment of a connecting element in a plan view;
- Figure 6:: a part of an insulation element in a prospective view;
- Figure 7:: a system according to figure 1 in a top view;
- Figure 8:: a part of the system according to figure 7 in a partly sectional view according to VIII-VIII in figure 7 and
- Figure 9:: a further embodiment of a part of the system according to figure 1 in side view.

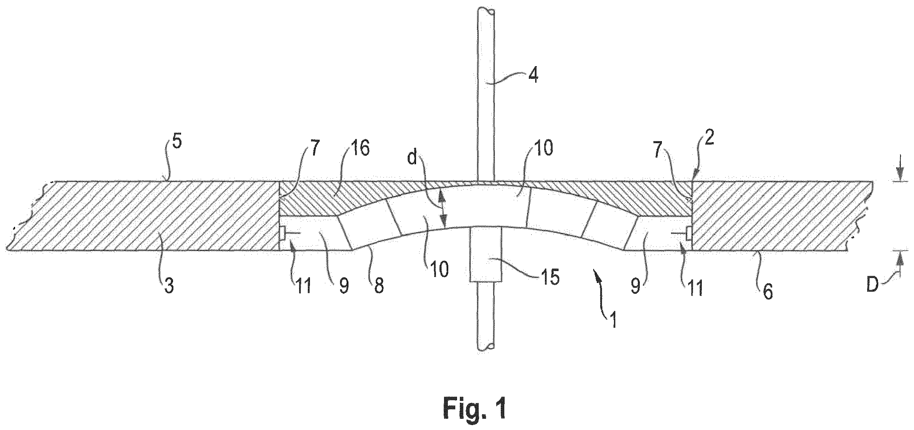

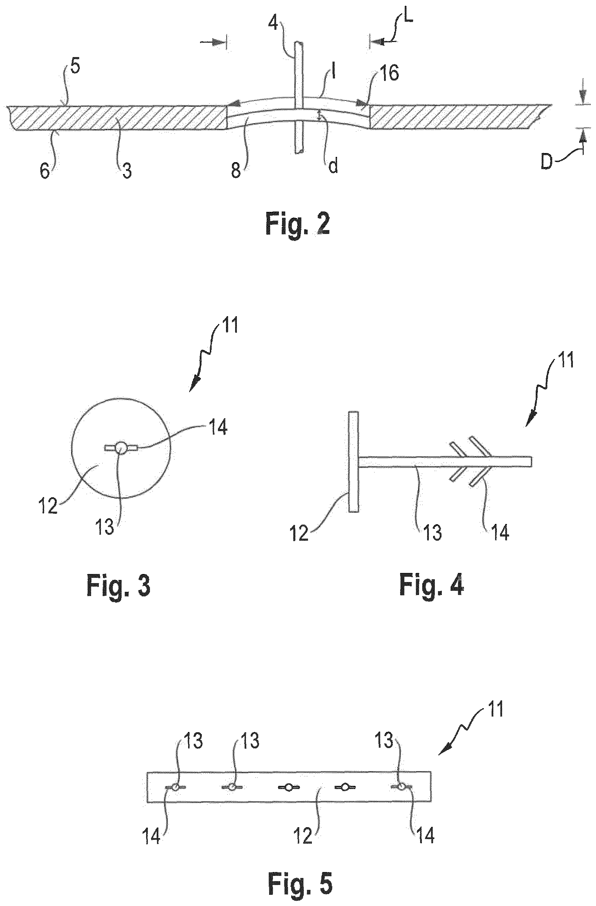

Figure 1 shows a first embodiment of a system consisting of a fire safe sealing 1 in an aperture 2 in a floor 3 through which a pipe 4 is guided. The floor 3 having a thickness D (compare Figure 2) has an upper surface 5 and a lower surface 6. Furthermore the floor 3 has lateral faces 7 of the aperture 2 running perpendicular to the lower surface 6 and the upper surface 5.

The fire safe sealing 1 consists of a non-combustible insulation element 8 made of mineral wool and having a thickness d (compare Figure 2). The insulation element 8 consists of two strip-shaped firestop elements, namely starter elements 9 being in direct contact with the lateral faces 7 of the aperture 2 and several firestop elements, namely intermediate elements 10 being arranged between the two starter elements 9 and being arranged bow-shaped in the aperture 2. Each starter element 9 has a right trapezoidal cross section and each intermediate element 10 has an isosceles trapezoidal cross section. The insulation element 8 is bendable and has a length I (compare figure 2) which is larger than the length L (compare figure 2) of the aperture 2. Therefore, the insulation element 8 is hold clamp fitted in the aperture 2 and provides the bow-shaped arrangement. The thickness d of the insulation element 8 is smaller than the thickness D of the floor 3 and therefore the aperture 2. As can be seen from figures 1 and 2 the insulation element 8 is arranged flush with the lower surface 6 of the floor 3 and erects in the middle of the aperture 2 in the direction to the plane of the upper surface 5 of the floor 3. The insulation element 8 is adjusted with its length so that the insulation element 8 inserted into the aperture 2 does not extend beyond two planes defined by the upper surface 5 and the lower surface 6 of the floor 3.

As can be seen in figure 1 connecting elements 11 are fixed to the lateral faces 7 of the aperture 2, each having a base plate 12 to be fixed on the lateral face 7 of the aperture 2 and at least a pin like element 13 to penetrate into the insulation element 8. The pin like element 13 is equipped with barbs 14 erecting from the pin like element 13 in a more or less radial direction whereby the barbs 14 are deviated into the direction to the base plate 12. The free end of the pin like element 13 is accumulated to simplify the procrastination of the insulation element 8 onto the connecting element 11.

As can be seen from figures 3 to 5 the connecting elements 11 can have different designs. Figures 3 and 4 show a first embodiment of the connecting element 11 having a round base plate 12 and only one pin like element 13. Several of these connecting elements 11 can be fixed to the lateral faces 7 of the aperture 2 whereby it is of advantage to fix these connecting elements 11 on at least two opposing lateral faces 7 in equal distances to each other.

A second embodiment is shown in figure 5. This embodiment of the connecting element 11 has a base plate 12 of rectangular shape. The base plate 12 is equipped with five pin like elements 13. Of course, the base plate 12 can have a length which allows to have more pin like elements 13 being arranged in equal distances to each other on the base plate 12.

The base plate 12 shown in figure 5 can have predetermined breaking points which allow to shorten the base plate 12 in accordance with the length or the width of the aperture 2. The connecting elements 11 can be fixed to the lateral faces 7 of the aperture 2 by using glue and/or by using screws.

The pipe 4 shown in figure 1 is surrounded by a not shown pipe shell and underneath the insulation element 8 the pipe 4 with the pipe shell is surrounded by a further pipe shell 15 having a diameter being larger than the diameter of the not shown hole in the insulation element 8 through which the pipe 4 runs. The pipe shell 15 therefore additionally seals the fire safe sealing 1 underneath the insulation element 8 which is of advantage in case of a fire in a room below floor 3. It additionally seals the fire safe sealing 1 against smoke.

Furthermore it can be seen from figure 1 that on top of the insulation element 8 a layer 16 is arranged made of concrete. The layer 16 is in horizontal alignment with the upper surface 5 of the floor 3 and covers the whole surface of the insulation element thereby joining at the outer surface of the pipe 4.

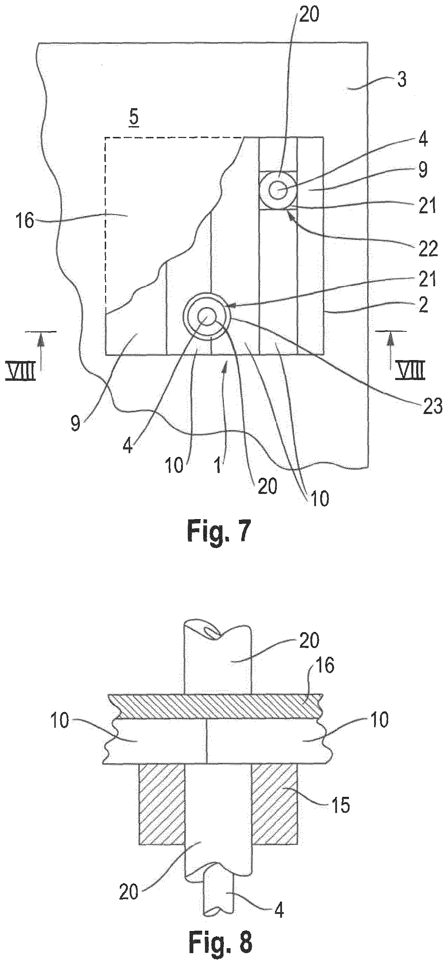

Figure 2 shows a second embodiment of the system which differs from the first embodiment according to figure 1 in that the insulation element 8 is not divided in starter elements 9 and intermediate elements 10 being arranged in alignment to each other between the two opposing lateral faces 7 of the aperture. Nevertheless, as will be described later with respect to figures 7 and 8 the insulation element 8 can be divided into two or more strip-shaped firestop elements running parallel to each other between the two lateral faces 7 of the aperture 2.

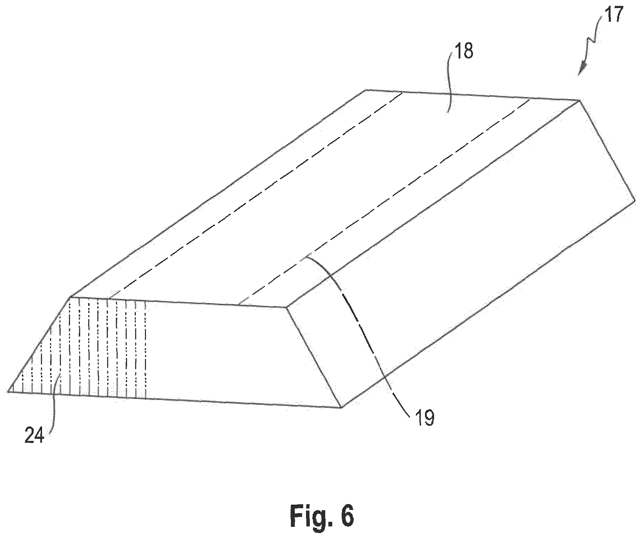

Figure 6 shows such strip-shaped firestop element 17 as an example of a starter element 9 or an intermediate element 10 of the insulation element 8. It can be seen that this bar-like element 17 has a trapezoidal cross section. On a top or main surface 18 two lines 19 are present which define reference lines for a cutting process. By using these lines 19 the firestop element 17 can be cut into a starter element 9 as shown in figure 1. On the other hand these firestop elements 17 can be used as intermediate elements 10 of the insulation element 8 shown in figure 1. The two starter elements 9 are produced in cutting the element 17 along one line 19. By cutting the element 17 a new face is provided which is fixed to the lateral face 7 of the aperture 2 whereby the top surface 18 is oriented in the direction to the upper surface 5 of the floor 3. The intermediate elements 10 of the insulation element 8 according to figure 1 are elements 17 which are not cut along the line 19 and which are arranged in the aperture 2 with the top surface 18 oriented towards the lower surface 6 of the floor 3. Furthermore, figure 6 shows a predominant fiber orientation (lines 24) which is substantially perpendicular to the top or main surface 18 of the element 9, 10.

Figures 7 and 8 show details of the system according to figure 1. As can be seen from figure 7 two pipes 4 are running through the aperture 2 each being surrounded by a pipe shell 20. The pipe 4 in the upper right corner of the aperture 2 is running between two ends of the intermediate element 10 which means that only one intermediate element 10 is cut into two parts and one part is installed on the one side of the pipe 4 and the other part is installed on the opposing side of the pipe 4 thereby leaving an opening 21 of quadratic shape open through which the pipe 4 with the pipe shell 20 runs.

Crotches 22 can be filled with mineral fibers and a binding agent to seal the opening 21 totally.

The second pipe 4 with a pipe shell 20 is arranged between two intermediate elements 10 running parallel to each other. In each intermediate element 10 a semicircular opening is cut to receive one half of the pipe 14 with the pipe shell 20. The opening 21 can have a diameter being a little bit smaller than the outer diameter of the pipe shell 20. Because of the elasticity of the pipe shell 20 made of mineral wool and/or the elasticity of the insulation element 8 the pipe shell 20 and/or the insulation element 8 can be compressed in the area of the opening so that the insulation element 8 is in tight contact to the outer surface of the pipe shell 20. On the other hand it is possible to have an opening 21 with a diameter being larger than the outer diameter of the pipe shell 20. In this case an annular space 23 is provided between the outer surface of the pipe shell 20 and the inner faces of the opening 21. This annular space 23 can be filled up with mineral fibers and a binding agent.

Finally, figure 9 shows a further embodiment of a fire safe sealing 1 which is illustrated partly. As can be seen from figure 9 the firestop element 10 has a smaller thickness d than the thickness D of the floor 3. The firestop element 10 is in contact with lateral faces 7 of the floor 3 whereby the lower surface of the firestop element 10 is arranged in a certain distance from the lower surface 5 of the floor of approximately 5% of the thickness of the floor 3 in the area of the contact to the lateral face 7 of the floor 3, illustrated as arrow d₁ in figure 9, and of approximately 20% of the thickness D of the floor 3 in the area of the width of the aperture 2, illustrated as arrow d₂ in figure 9.

## Claims

1. A system consisting of a fire safe sealing (1) and a floor or a ceiling of a building comprising an aperture (2) in the floor (3) or the ceiling of the building, through which aperture (2) at least a pipe (4), a cable or the like is guided, the ceiling or the floor (3) having an upper surface (5) and a lower surface (6), whereby the fire safe sealing (1) consists of at least one non-combustible insulation element (8), preferably made of mineral wool and/or bound mineral fibers, and wherein the insulation element (8) is bendable with respect to at least its longitudinal axis,
**characterized in that**
the insulation element (8) has a length (l) and/or a width being larger than a length (L) and/or a width of the aperture (2), whereby the difference(s) of the length (I) of the insulation element (8) relative to the length (L) of the aperture (2) and/or the width of the insulation element (8) relative to the width of the aperture (2) is adjusted so that the insulation element (8) inserted into the aperture (2) is fixed to the aperture in a bow-shaped arrangement because of its larger length (I) and/or width as well as its bendability and elasticity whereby the insulation element (8) does not extend beyond two planes defined by the upper surface (5) and the lower surface (6) of the ceiling or the floor (3) and wherein the insulation element (8) is therefore force clamped into the aperture (2) so that the insulation element (8) is able to carry a covering layer of mortar or concrete arrangeable on top of the insulation element (8), without the need for additional supporting elements from below.

2. The system according to claim 1,
**characterized in that**
the non-combustible insulation element (8) consists of at least two, preferably several firestop elements (9, 10), each having two main surfaces being arranged parallel to each other and having different lengths (a, b), whereby the two surfaces are connected to each other via lateral faces.

3. The system according to claim 1 or 2,
**characterized in that**
connecting elements (11) are fixed to lateral faces (7) of the aperture (2), each having a base plate (12) to be fixed on a lateral face (7) of the aperture (2) and at least one pin like element (13) to penetrate into the insulation element (8).

4. The system according to claim 3,
**characterized in that**
the pin like element (13) is provided with at least one, preferably several barbs (14).

5. The system according to any one of the claims 1 to 4,
**characterized in that**
the insulation element (8) itself or the firestop elements (9, 10) forming the insulation element (8) have a trapezoidal cross section, whereby preferably elements provided as starter elements (9) being in contact with lateral faces of the aperture (2) have a right trapezoidal cross section and/or elements provided as intermediate elements (10) being in contact with a starter element (9) or each other have an isosceles trapezoidal cross section.

6. The system according to any one of the claims 1 to 5,
**characterized in that**
the insulation element (8) made of mineral wool has a bulk density of 70 to 200 kg/m³, preferably between 120 to 160 kg/m³.

7. The system according to any one of the claims 1 to 6,
**characterized in that**
the insulation element (8) has a lamellar like fiber orientation, e.g. a predominant fiber orientation which is substantially perpendicular to its main surfaces.

8. The system according to any one of the claims 2 to 4,
**characterized in that**
the insulation element (8) is divided into starter elements and intermediate elements (9, 10) in lengthwise direction and/or perpendicular to its lengthwise direction.

9. The system according to any one of the claims 1 to 8,
**characterized in that**
the insulation element (8) comprises areas or starter elements (9) being arranged in direct contact to the lateral faces (7) of the aperture (2) and having an increased compressibility in the plane of the aperture (2), preferably provided by a predominant fiber orientation perpendicular to the main surfaces of the insulation element (8).

10. The system according to any one of the claims 1 to 9,
**characterized in that**
the insulation element (8) has a thickness of 40 to 90%, preferably of 50 to 70% of the thickness of the ceiling or the floor (3).

11. The system according to any one of the claims 1 to 10,
**characterized in that**
the insulation element (8) is covered by a layer (16) of concrete or mortar, which layer (16) is in horizontal alignment with the upper surface (5) of the ceiling or the floor (3).

12. The system according to any one of the claims 1 to 11,
**characterized in that**
the pipe (4), cable or the like is surrounded by a pipe shell (20), preferably made of mineral wool and having at least a length equal to the thickness of the insulation element (8), preferably equal to the thickness of the ceiling or the floor (3).

13. The system according to any one of the claims 1 to 12,
**characterized in that**
the pipe (4), cable or the like is surrounded by a pipe shell (15), preferably made of mineral wool, being arranged underneath the insulation element (8) and having a diameter being larger than a diameter of an opening (21) in the insulation element (8) through which the pipe (4), cable or the like is guided, whereby the pipe shell (15) is preferably in contact with the surface of the insulation element (8).

14. The system according to any one of the claims 1 to 13,
**characterized in that**
the insulation element (8) is made of lamellas made of mineral wool, preferably covered and/or connected by a foil, e. g. made of metal, especially alloy, being arranged on at least one main surface of the insulation element (8).

15. A method for sealing an aperture (2) through which at least a pipe (4), a cable or the like is guided through, in a floor (3) or a ceiling of a building having an upper surface (5) and a lower surface (6) by using at least one non-combustible insulation element (8), preferably made of mineral wool, the insulation element (8) being bendable with respect to at least its longitudinal axis, as a fire safe sealing (1),
**characterized in that**
the insulation element (8), having a length (I) and/or a width being larger than a length (L) and/or a width of the aperture (2) is inserted into the aperture (2) in a bow-shaped arrangement, whereby the difference(s) of the length (I) of the insulation element relative to the length (L) of the aperture (2) and/or the width of the insulation element (8) relative to the width of the aperture (2) is adjusted so that the insulation element (8) inserted into the aperture (2) is fixed to the aperture in said bow-shaped arrangement because of its larger length (I) and/or width as well as its bendability and elasticity whereby the insulation element (8) does not extend beyond two planes defined by the upper surface (5) and the lower surface (6) of the ceiling or the floor (3) and wherein the insulation element (8) is therefore force clamped into the aperture (2) so that the insulation element (8) is able to carry a covering layer of mortar or concrete arrangeable on top of the insulation element (8), without the need for additional supporting elements from below.

16. The method according to claim 15,
**characterized in that**
connecting elements (11) are fixed to lateral faces (7) of the aperture (2), each having a base plate (12) to be fixed on a lateral face (7) of the aperture (2) and at least one pin like element (13) penetrating into the insulation element (8).

17. The method according to claims 15 or 16,
**characterized in that**
the insulation element (8) is covered by a layer (16) of concrete or mortar, which layer (16) is in horizontal alignment with the upper surface (5) of the ceiling or the floor (3).

18. The method according to any one of the claims 15 to 17,
**characterized in that**
a pipe (4), a cable or the like running through the aperture (2) is surrounded by a pipe shell (20), preferably made of mineral wool before the insulation element (8) is inserted into the aperture (2), which pipe shell (20) has at least a length equal to the thickness of the insulation element (8), preferably equal to the thickness of the ceiling or the floor (3).

19. The method according to any one of the claims 15 to 18,
**characterized in that**
a pipe (4), a cable or the like running through the aperture (2) is surrounded by a pipe shell (15) preferably made of mineral wool after the insulation element (8) is inserted into the aperture (2), which pipe shell (15) is arranged underneath the insulation element (8) and having a diameter being larger than a diameter of an opening (21) in the insulation element (8) through which the pipe (4), cable or the like is guided, whereby the pipe shell (15) is preferably in contact with the surface of the insulation element (8).

20. The method according to any one of the claims 15 to 19,
**characterized in that**
in a first step the pipe (4), cable or the like is inserted into the aperture (2);
in a second step an opening (21) for the pipe (4), cable or the like is provided in the insulation element (8);
in a third step the insulation element (8) is arranged in the aperture (2);
and finally in a fourth step a layer (16) of concrete or mortar is arranged on the upper surface of the insulation element (8) which layer (16) is preferably in horizontal alignment with the upper surface of the ceiling or the floor (3).

21. The method according to any one of the claims 15 to 20,
**characterized in that**
in a first step the insulation element (8) is arranged in the aperture (2);
in a second step an opening (21) for the pipe (4), cable or the like is provided in the insulation element (8);
in a third step the pipe (4), cable or the like is inserted into the opening (21) of the insulation element (8);
and finally in a fourth step a layer (16) of concrete or mortar is arranged on the upper surface of the insulation element (8) which layer is preferably in horizontal alignment with the upper surface of the ceiling or the floor (3).

## Patentansprüche

1. System bestehend aus einer feuerfesten Dichtung (1) und einem Boden oder einer Decke eines Gebäudes mit einer Öffnung (2) in dem Boden (3) oder der Decke des Gebäudes, durch welche Öffnung (2) zumindest ein Rohr (4), ein Kabel oder dergleichen geführt ist, wobei die Decke oder der Boden (3) eine Oberseite (5) und eine Unterseite (6) aufweisen, wobei die feuerfeste Dichtung (1) aus zumindest einem nicht brennbaren Isolierelement (8) besteht, das vorzugsweise aus Mineralwolle und/oder gebundenen Mineralfasern gebildet ist, und wobei das Isolierelement (8) zumindest hinsichtlich seiner Längsachse biegsam ist,
**dadurch gekennzeichnet,**
**dass** das Isolierelement (8) eine Länge (I) und/oder eine Breite aufweist, die größer ist als eine Länge (L) und/oder eine Breite der Öffnung (2), wobei die Differenz(en) der Länge (I) des Isolierelements (8) relativ zur Länge (L) der Öffnung (2) und/oder der Breite des Isolierelements (8) relativ zur Breite der Öffnung (2) derart angepasst ist, dass das in die Öffnung (2) eingesetzte Isolierelement (8) wegen seiner größeren Länge (l) und/oder Breite sowie seiner Biegsamkeit und Elastizität in einer bogenförmigen Anordnung an der Öffnung festgelegt ist, wobei sich das Isolierelement (8) über zwei Ebenen hinaus erstreckt, die durch die Oberseite (5) und die Unterseite (6) der Decke oder des Bodens (3) definiert werden, und wobei das Isolierelement (8) daher kraftschlüssig in die Öffnung (2) geklemmt ist, so dass das Isolierelement (8) eine auf der Oberseite des Isolierelements (8) anordenbare Mörtel- oder Betonschicht ohne notwendige zusätzliche Stützelemente von unten tragen kann.

2. System nach Anspruch 1,
**dadurch gekennzeichnet,**
**dass** das nicht brennbare Isolierelement (8) aus mindestens zwei, vorzugsweise mehreren Brandschutzelementen (9, 10) besteht, die jeweils zwei parallel zueinander angeordnete Hauptflächen unterschiedlicher Längen (a, b) aufweisen, wobei die beiden Flächen über Seitenflächen verbunden sind.

3. System nach Anspruch 1 oder 2,
**dadurch gekennzeichnet,**
**dass** Verbindungselemente (11) an Seitenflächen (7) der Öffnung (2) befestigt sind, die jeweils eine an einer Seitenfläche (7) festzulegenden Basisplatte (2) und zumindest ein stiftförmiges Element (13) zum Eindringen in das Isolierelement (8) aufweisen.

4. System nach Anspruch 3,
**dadurch gekennzeichnet,**
**dass** das stiftförmige Element (13) mit mindestens einem, vorzugsweise mehreren Widerhaken (14) versehen ist.

5. System nach einem der Ansprüche 1 bis 4,
**dadurch gekennzeichnet,**
**dass** das Isolierelement (8) selbst oder die das Isolierelement (8) bildenden Brandschutzelemente (9, 10) einen trapezförmigen Querschnitt aufweisen, wobei als Anfangselemente (9) vorgesehene Elemente, die sich mit Seitenflächen der Öffnung (2) in Kontakt befinden, vorzugsweise einen rechtwinklig trapezförmigen Querschnitt und/oder als Zwischenelemente (10) vorgesehene Elemente, die sich mit einem Anfangselement (9) oder miteinander in Kontakt befinden, einen gleichschenkelig trapezförmigen Querschnitt aufweisen.

6. System nach einem der Ansprüche 1 bis 5,
**dadurch gekennzeichnet,**
**dass** das aus Mineralwolle bestehende Isolierelement (8) eine Rohdichte von 70 bis 200 kg/m³, vorzugsweise zwischen 120 bis 160 kg/m³ aufweist.

7. System nach einem der Ansprüche 1 bis 6,
**dadurch gekennzeichnet,**
**dass** das Isolierelement (8) eine lamellenartige Faserorientierung aufweist, z.B. eine vorherrschende Faserorientierung, die im Wesentlichen senkrecht zu seinen Hauptflächen verläuft.

8. System nach einem der Ansprüche 2 bis 4,
**dadurch gekennzeichnet,**
**dass** das Isolierelement (8) in Längsrichtung und/oder senkrecht zu seiner Längsrichtung in Anfangselemente und Zwischenelemente (9, 10) unterteilt ist.

9. System nach einem der Ansprüche 1 bis 8,
**dadurch gekennzeichnet,**
**dass** das Isolierelement (8) Bereiche oder Anfangselemente (9) umfasst, die in direktem Kontakt mit den Seitenflächen (7) der Öffnung (2) angeordnet sind und in der Ebene der Öffnung (2) über eine erhöhte Komprimierbarkeit verfügen, die durch eine vorherrschende Faserorientierung senkrecht zu den Hauptflächen des Isolierelements (8) bereitgestellt wird.

10. System nach einem der Ansprüche 1 bis 8,
**dadurch gekennzeichnet,**
**dass** das Isolierelement (8) eine Dicke von 40 bis 90% aufweist, vorzugsweise von 50 bis 70% der Dicke der Decke oder des Bodens (3).

11. System nach einem der Ansprüche 1 bis 10,
**dadurch gekennzeichnet,**
**dass** das Isolierelement (8) mit einer Schicht (16) aus Mörtel oder Beton bedeckt ist, wobei die Schicht (16) horizontal mit der Oberseite (5) der Decke oder des Bodens (3) ausgerichtet ist.

12. System nach einem der Ansprüche 1 bis 11,
**dadurch gekennzeichnet,**
**dass** das Rohr (4), das Kabel oder dergleichen von einem Rohrmantel (20) umschlossen ist, der vorzugsweise aus Mineralwolle besteht und mindestens eine Länge aufweist, die gleich der Dicke des Isolierelements (8), vorzugsweise gleich der Dicke der Decke oder des Bodens (3) entspricht.

13. System nach einem der Ansprüche 1 bis 12,
**dadurch gekennzeichnet,**
**dass** das Rohr (4), das Kabel oder dergleichen von einem Rohrmantel (15), vorzugsweise aus Mineralwolle, umschlossen ist, der unter dem Isolierelement (8) angeordnet ist und einen Durchmesser aufweist, der größer ist als ein Durchmesser einer Öffnung (21) in dem Isolierelement (8), durch welche das Rohr (4), das Kabel oder dergleichen hindurchgeführt ist, wobei sich der Rohrmantel (15) vorzugsweise mit der Oberfläche des Isolierelements (8) in Kontakt befindet.

14. System nach einem der Ansprüche 1 bis 13,
**dadurch gekennzeichnet,**
**dass** das Isolierelement (8) aus Mineralwolle-Lamellen besteht, die vorzugsweise mit einer Folie, z.B. aus Metall, speziell einer Metalllegierung, bedeckt und/oder verbunden sind, die auf wenigstens einer Hauptfläche des Isolierelements (8) angeordnet ist.

15. Verfahren zum Abdichten einer Öffnung (2), durch welche zumindest ein Rohr (4), ein Kabel oder dergleichen hindurchgeführt wird, in einem Boden (3) oder einer Decke eines Gebäudes mit einer Oberseite (5) und einer Unterseite (6) durch Verwenden von zumindest einem Isolierelement (8), das zumindest hinsichtlich seiner Längsachse biegsam ist, als feuerfeste Dichtung,
**dadurch gekennzeichnet,**
**dass** das Isolierelement (8), das eine Länge (I) und/oder eine Breite aufweist, die größer ist als eine Länge (L) und/oder eine Breite der Öffnung (2), in einer bogenförmigen Anordnung in die Öffnung (2) eingesetzt wird, wobei die Differenz(en) der Länge (I) des Isolierelements relativ zur Länge (L) der Öffnung (2) und/oder der Breite des Isolierelements (8) relativ zur Breite der Öffnung (2) derart angepasst wird, dass das in die Öffnung (2) eingesetzte Isolierelement (8) aufgrund seiner größeren Länge (I) und/oder Breite sowie seiner Biegsamkeit und Elastizität in dieser bogenförmigen Anordnung an der Öffnung festgelegt wird, wobei sich das Isolierelement (8) nicht über die beiden durch die Oberseite (5) und die Unterseite (6) der Decke oder des Bodens (3) definierten Ebenen hinaus erstreckt und wobei das Isolierelement (8) daher kraftschlüssig in die Öffnung (2) geklemmt wird, so dass das Isolierelement (8) eine auf der Oberseite des Isolierelements (8) anordenbare Mörtel- oder Betonschicht ohne notwendige zusätzliche Stützelemente von unten tragen kann.

16. Verfahren nach Anspruch 15,
**dadurch gekennzeichnet,**
**dass** Verbindungselemente (11) an den Seitenflächen (7) der Öffnung (2) befestigt werden, die jeweils eine an einer Seitenfläche (7) der Öffnung (2) zu befestigende Basisplatte (12) und zumindest ein in das Isolierelement (8) eindringendes stiftförmiges Element (13) aufweisen.

17. Verfahren nach Anspruch 15 oder 16,
**dadurch gekennzeichnet,**
**dass** das Isolierelement (8) mit einer Schicht (16) aus Beton oder Mörtel bedeckt wird, wobei die Schicht (16) horizontal mit der Oberseite (5) der Decke oder des Bodens (3) ausgerichtet wird.

18. Verfahren nach einem der Ansprüche 15 bis 17,
**dadurch gekennzeichnet,**
**dass** ein Rohr (4), ein Kabel oder dergleichen, das durch die Öffnung (2) verläuft, mit einem Rohrmantel (20), vorzugsweise aus Mineralwolle, umschlossen wird, bevor das Isolierelement (8) in die Öffnung (2) eingesetzt wird, wobei der Rohrmantel (20) mindestens eine Länge aufweist, die gleich der Dicke des Isolierelements (8), vorzugsweise gleich der Dicke der Decke oder des Bodens (3) entspricht.

19. Verfahren nach einem der Ansprüche 15 bis 18,
**dadurch gekennzeichnet,**
**dass** ein Rohr (4), ein Kabel oder dergleichen, das durch die Öffnung (2) verläuft, mit einem Rohrmantel (15), vorzugsweise aus Mineralwolle, umschlossen wird, der unter dem Isolierelement (8) angeordnet wird und einen Durchmesser aufweist, der größer ist als ein Durchmesser einer Öffnung (21) in dem Isolierelement (8), durch welche das Rohr (4), das Kabel und oder dergleichen hindurchgeführt wird, wobei sich der Rohrmantel (15) vorzugsweise mit der Oberfläche des Isolierelements (8) in Kontakt befindet.

20. Verfahren nach einem der Ansprüche 15 bis 19,
**dadurch gekennzeichnet, dass**
in einem ersten Schritt das Rohr (4), das Kabel oder dergleichen in die Öffnung (2) eingesetzt wird;
in einem zweiten Schritt eine Öffnung (21) für das Rohr (4), das Kabel oder dergleichen in dem Isolierelement (8) vorgesehen wird;
in einem dritten Schritt das Isolierelement (8) in der Öffnung (2) angeordnet wird;
und schließlich in einem vierten Schritt eine Schicht (16) aus Beton oder Mörtel auf der Oberseite des Isolierelements (8) angeordnet wird, wobei die Schicht (16) vorzugsweise horizontal mit der Oberseite der Decke oder des Bodens (3) ausgerichtet wird.

21. Verfahren nach einem der Ansprüche 15 bis 20,
**dadurch gekennzeichnet, dass**
in ein einem ersten Schritt das Isolierelement (8) in der Öffnung (2) angeordnet wird;
in einem zweiten Schritt eine Öffnung (21) für das Rohr (4), das Kabel oder dergleichen in dem Isolierelement (8) vorgesehen wird;
in einem dritten Schritt das Rohr (4), das Kabel oder dergleichen in die Öffnung (21) des Isolierelements (8) eingesetzt wird;
und schließlich in einem vierten Schritt eine Schicht (16) aus Beton oder Mörtel auf der Oberseite des Isolierelements (8) angeordnet wird, wobei die Schicht vorzugsweise horizontal mit der Oberseite der Decke oder des Bodens (3) ausgerichtet wird.

## Revendications

1. Système constitué d'un scellement anti-incendie (1) et d'un plancher ou d'un plafond d'un bâtiment avec une ouverture (2) dans le plancher (3) ou le plafond du bâtiment, ouverture (2) à travers laquelle est guidé au moins un tube (4), un câble ou similaire, le plafond ou le plancher (3) présentant un côté supérieur (5) et un côté inférieur (6), dans lequel le scellement anti-incendie (1) est constitué d'au moins un élément isolant (8) non combustible, qui est de préférence formé de laine minérale et/ou de fibres minérales liées, et dans lequel l'élément isolant (8) est flexible au moins en ce qui concerne son axe longitudinal,
**caractérisé en ce que**
l'élément isolant (8) présente une longueur (I) et/ou une largeur supérieure à une longueur (L) et/ou une largeur de l'ouverture (2), la ou les différences de la longueur (I) de l'élément isolant (8) par rapport à la longueur (L) de l'ouverture (2) et/ou de la largeur de l'élément isolant (8) par rapport à la largeur de l'ouverture (2) étant ainsi adaptées de telle manière que l'élément isolant (8) inséré dans l'ouverture (2) est fixé à l'ouverture dans une disposition en forme d'arc en raison de sa plus grande longueur (I) et/ou largeur ainsi que de sa flexibilité et de son élasticité, l'élément isolant (8) s'étendant au-delà de deux plans définis par la face supérieure (5) et la face inférieure (6) du plafond ou du plancher (3), et l'élément isolant (8) étant donc serré par adhérence dans l'ouverture (2), de sorte que l'élément isolant (8) peut supporter une couche de mortier ou de béton pouvant être disposée sur la face supérieure de l'élément isolant (8) sans éléments de support supplémentaires nécessaires par le bas.

2. Système selon la revendication 1,
**caractérisé en ce que**
l'élément isolant incombustible (8) est constitué d'au moins deux, de préférence de plusieurs éléments de protection contre l'incendie (9, 10), qui présentent chacun deux surfaces principales de longueurs différentes (a, b) disposées parallèlement l'une à l'autre, les deux surfaces étant reliées par des surfaces latérales.

3. Système selon la revendication 1 ou 2,
**caractérisé en ce que**
des éléments de connexion (11) sont fixés sur des faces latérales (7) de l'ouverture (2), chacun comprenant une plaque de base (2) à fixer sur une face latérale (7) et au moins un élément en forme de broche (13) destiné à pénétrer dans l'élément isolant (8).

4. Système selon la revendication 3,
**caractérisé en ce que**
l'élément en forme de broche (13) est pourvu d'au moins un, de préférence de plusieurs crochets (14).

5. Système selon l'une quelconque des revendications 1 à 4,
**caractérisé en ce que**
l'élément isolant (8) lui-même ou les éléments de protection contre l'incendie (9, 10) formant l'élément isolant (8) présentent une section transversale trapézoïdale, les éléments prévus comme éléments initiaux (9) qui se trouvent en contact avec des surfaces latérales de l'ouverture (2) présentant de préférence une section transversale trapézoïdale à angle droit et/ou les éléments prévus comme éléments intermédiaires (10) qui se trouvent en contact avec un élément initial (9) ou entre eux présentant une section transversale trapézoïdale isocèle.

6. Système selon l'une quelconque des revendications 1 à 5,
**caractérisé en ce que**
l'élément isolant (8) constitué de laine minérale présente une masse volumique apparente comprise entre 70 et 200 kg/m³, de préférence entre 120 et 160 kg/m³.

7. Système selon l'une quelconque des revendications 1 à 6,
**caractérisé en ce que**
l'élément isolant (8) présente une orientation de fibres de type lamellaire, par exemple une orientation de fibres prédominante, sensiblement perpendiculaire à ses faces principales.

8. Système selon l'une quelconque des revendications 2 à 4,
**caractérisé en ce que**
l'élément isolant (8) est divisé en éléments initiaux et en éléments intermédiaires (9, 10) dans la direction longitudinale et/ou perpendiculairement à sa direction longitudinale.

9. Système selon l'une quelconque des revendications 1 à 8,
**caractérisé en ce que**
l'élément isolant (8) comprend des zones ou des éléments initiaux (9) disposés en contact direct avec les surfaces latérales (7) de l'ouverture (2) et disposant d'une compressibilité accrue dans le plan de l'ouverture (2), fournie par une orientation prédominante des fibres perpendiculairement aux surfaces principales de l'élément isolant (8).

10. Système selon l'une quelconque des revendications 1 à 8,
**caractérisé en ce que**
l'élément isolant (8) a une épaisseur de 40 à 90%, de préférence de 50 à 70% de l'épaisseur du plafond ou du plancher (3).

11. Système selon l'une quelconque des revendications 1 à 10,
**caractérisé en ce que**
l'élément isolant (8) est recouvert d'une couche (16) de mortier ou de béton, ladite couche (16) étant alignée horizontalement avec la face supérieure (5) du plafond ou du plancher (3).

12. Système selon l'une quelconque des revendications 1 à 11,
**caractérisé en ce que**
le tube (4), le câble ou similaire est entouré d'un enveloppe de tube (20), de préférence en laine minérale, ayant au moins une longueur égale à l'épaisseur de l'élément isolant (8), de préférence égale à l'épaisseur du plafond ou du plancher (3).

13. Système selon l'une quelconque des revendications 1 à 12,
**caractérisé en ce que**
le tube (4), le câble ou similaire est entouré d'un enveloppe de tube (15), de préférence en laine minérale, disposée sous l'élément isolant (8) et présentant un diamètre supérieur à un diamètre d'une ouverture (21) dans l'élément isolant (8) à travers laquelle le tube (4), le câble ou similaire est passé l'enveloppe de tube (15) étant de préférence en contact avec la surface de l'élément isolant (8).

14. Système selon l'une quelconque des revendications 1 à 13,
**caractérisé en ce que**
l'élément isolant (8) est constitué de lamelles de laine minérale, de préférence recouvertes et/ou reliées par une feuille, par exemple en métal, en particulier en alliage métallique, disposée sur au moins une surface principale de l'élément isolant (8).

15. Procédé pour sceller une ouverture (2), à travers laquelle passe au moins un tube (4), un câble ou similaire, dans un plancher (3) ou un plafond d'un bâtiment ayant un côté supérieur (5) et un côté inférieur (6), en utilisant au moins un élément isolant (8), qui est flexible au moins en ce qui concerne son axe longitudinal, comme joint d'étanchéité résistant au feu,
**caractérisé en ce que**
l'élément isolant (8), qui présente une longueur (I) et/ou une largeur supérieure à une longueur (L) et/ou une largeur de l'ouverture (2), est inséré dans l'ouverture (2) selon une disposition en forme d'arc, la ou les différences de la longueur (I) de l'élément isolant par rapport à la longueur (L) de l'ouverture (2) et/ou de la largeur de l'élément isolant (8) par rapport à la largeur de l'ouverture (2) étant adaptées de telle sorte que l'élément isolant (8) inséré dans l'ouverture (2) est fixé à l'ouverture en raison de sa longueur (I) et/ou de sa largeur supérieures ainsi que de sa flexibilité et de son élasticité dans cette disposition en forme d'arc, l'élément isolant (8) ne s'étendant pas au-delà des deux plans définis par la face supérieure (5) et la face inférieure (6) du plafond ou du plancher (3) et l'élément isolant (8) étant par conséquent serré par adhérence dans l'ouverture (2), de sorte que l'élément isolant (8) peut porter une couche de mortier ou de béton pouvant être disposée sur la face supérieure de l'élément isolant (8) sans éléments de soutien supplémentaires nécessaires par le bas.

16. Procédé selon la revendication 15,
**caractérisé en ce que**
des éléments de liaison (11) sont fixés sur les faces latérales (7) de l'ouverture (2), chacun comprenant une plaque de base (12) à fixer sur une face latérale (7) de l'ouverture (2) et au moins un élément en forme de tige (13) pénétrant dans l'élément isolant (8).

17. Procédé selon la revendication 15 ou 16,
**caractérisé en ce que**
l'élément isolant (8) est recouvert d'une couche (16) de béton ou de mortier, ladite couche (16) étant alignée horizontalement avec la face supérieure (5) du plafond ou du plancher (3).

18. Procédé selon l'une quelconque des revendications 15 à 17,
**caractérisé en ce**
**qu'**un tube (4), un câble ou similaire passant par l'ouverture (2) est entouré d'un enveloppe de tube (20), de préférence en laine minérale, avant que l'élément isolant (8) ne soit inséré dans l'ouverture (2), l'enveloppe de tube (20) ayant une longueur au moins égale à l'épaisseur de l'élément isolant (8), de préférence égale à l'épaisseur du plafond ou du plancher (3).

19. Procédé selon l'une quelconque des revendications 15 à 18,
**caractérisé en ce**
**qu'**un tube (4), un câble ou similaire passant par l'ouverture (2) est entouré d'un enveloppe de tube (15), de préférence en laine minérale, disposée sous l'élément isolant (8) et ayant un diamètre supérieur à un diamètre d'une ouverture (21) dans l'élément isolant (8) par laquelle passe le tube (4), le câble et ou similaire, l'enveloppe de tube (15) étant de préférence en contact avec la surface de l'élément isolant (8).

20. Procédé selon l'une quelconque des revendications 15 à 19,
**caractérisé en ce que**
dans une première étape, le tube (4), le câble ou similaire est inséré dans l'ouverture (2);
dans une deuxième étape, on prévoit une ouverture (21) pour le tube (4), le câble ou similaire dans l'élément isolant (8);
dans une troisième étape, l'élément isolant (8) est placé dans l'ouverture (2);
et enfin, dans une quatrième étape, on dispose une couche (16) de béton ou de mortier sur la face supérieure de l'élément isolant (8), ladite couche (16) étant de préférence alignée horizontalement avec la face supérieure du plafond ou du plancher (3).

21. Procédé selon l'une quelconque des revendications 15 à 20,
**caractérisé en ce que**
dans une première étape, l'élément isolant (8) est disposé dans l'ouverture (2); dans une deuxième étape, on prévoit une ouverture (21) pour le tube (4), le câble ou similaire dans l'élément isolant (8);
dans une troisième étape, on insère le tube (4), le câble ou similaire dans l'ouverture (21) de l'élément isolant (8);
et enfin, dans une quatrième étape, on place une couche (16) de béton ou de mortier sur la face supérieure de l'élément isolant (8), ladite couche étant de préférence alignée horizontalement avec la face supérieure du plafond ou du plancher (3).
